# EUROPÄISCHE PATENTANMELDUNG

(11) **EP 1 036 897 A1**
(43) Veröffentlichungstag der Anmeldung: **20.09.2000**
(21) Anmeldenummer: 00100970.3
(22) Anmeldetag: 19.01.2000
(51) Int. Cl.: E04G 23/02, E04F 13/08

(54) **Befestigungselement und Verfahren zur Abstandsbefestigung einer Fassade an einem Mauerwerk**

(30) Priorität: 18.03.1999 DE 19912151
(71) Anmelder: fischerwerke Artur Fischer GmbH & Co. KG, 72178 Waldachtal (DE)
(72) Erfinder: Lind, Stefan, 72178 Waldachtal (DE); Siebert, Francis, 68116 Guewenheim (FR); Windbacher, Robert, 72178 Waldachtal (DE)

(57) **Zusammenfassung**

Die Erfindung betrifft ein Befestigungselement (10) zur nachträglichen Abstandsbefestigung einer Fassade (32) an einem Mauerwerk (34) im Sanierungsfall. Das erfindungsgemäße Befestigungselement (10) weist einen Maueranker (12) auf, der durch ein Durchgangsloch (36) in der Fassade (32) hindurch in dem Mauerwerk (34) verankerbar ist, sowie einen als Schraube ausgebildeten Fassadenhalter (14), der durch das Durchgangsloch (36) in der Fassade (32) hindurch in den Maueranker (12) eingeschraubt wird. Der Fassadenhalter (14) weist einen Injektionskanal (24) mit seitlichen Austrittsöffnungen (26) auf, durch die ein Injektionsmörtel in das Durchgangsloch (36) in der Fassade (32) einspritzbar ist, der die Fassade (32) mit dem Fassadenhalter (14) verbindet.

## Beschreibung

Die Erfindung betrifft ein Befestigungselement zur Abstandsbefestigung einer Fassade an einem Mauerwerk gemäß dem Oberbegriff des Anspruchs 1 sowie ein Verfahren zur Verwendung des Befestigungselements gemäß dem Oberbegriff des Anspruchs 8.

Derartige Befestigungselemente weisen üblicherweise einen Maueranker auf, der in dem Mauerwerk verankerbar ist und an dem die Fassade mit Abstand vom Mauerwerk befestigbar ist. Der Maueranker kann beispielsweise mit Mörtel (auch Kunstharzmörtel) oder mit einem Dübel in einem Bohrloch in dem Mauerwerk verankert werden. Die bekannten Befestigungselemente haben den Nachteil, dass im Sanierungsfall die Fassade vom Mauerwerk abgenommen werden muss. Mit Sanierungsfall ist gemeint, dass das Befestigungselement beispielsweise infolge von Korrosion oder durch Angriff aggressiver Medien seine Festigkeit verloren hat oder die Verankerung des Befestigungselements im Mauerwerk oder die Befestigung der Fassade am Befestigungselement durch Witterungseinflüsse oder aggressive Medien nachgelassen hat.

Der Erfindung liegt die Aufgabe zugrunde, ein Befestigungselement vorzuschlagen, das nachträglich bei bereits am Mauerwerk befestigter Fassade anbringbar ist, ohne die Fassade entfernen zu müssen. Das erfindungsgemäße Befestigungselement soll zusätzlich zu oder als Ersatz von bereits vorhandenen Befestigungselementen anbringbar sein. Weiterhin ist es Aufgabe der Erfindung, ein Verfahren zur Anbringung des erfindungsgemäßen Befestigungselements vorzuschlagen.

Diese Aufgabe wird erfindungsgemäß durch die Merkmale der Ansprüche 1 und 8 gelöst.

Das erfindungsgemäße Befestigungselement weist einen Fassadenhalter auf, der in ein Durchgangsloch in der Fassade einsetzbar ist. Mit einer Verbindungseinrichtung ist der Fassadenhalter mit dem Maueranker verbindbar. Der Fassadenhalter weist einen Injektionskanal auf, der bei in die Fassade eingesetztem Fassadenhalter von einer Außenseite der Fassade her zugänglich ist und der mindestens eine seitliche Austrittsöffnung aufweist. Durch den Injektionskanal ist ein Injektionsmörtel oder dgl. in das Durchgangsloch in der Fassade, in das der Fassadenhalter eingesetzt ist, einspritzbar, der nach dem Aushärten die Fassade mit dem Fassadenhalter verbindet.

Die Erfindung hat den Vorteil, dass das Befestigungselement nachträglich bei an dem Mauerwerk befestigter Fassade anbringbar ist, ohne die Fassade abnehmen zu müssen. Hat sich die Belastbarkeit einer Abstandsbefestigung einer Fassade an einem Mauerwerk durch Witterungseinflüsse oder dgl. verringert, können zusätzlich und/oder anstelle von vorhandenen Befestigungselementen erfindungsgemäße Befestigungselemente angebracht werden, ohne dass hierzu die Fassade abgenommen werden muss. Auch wenn eine vorhandene Abstandsbefestigung nur auf einem Teil der Fassadenfläche schlecht geworden ist, kann die Fassade bereichsweise an den betroffenen Stellen mit den erfindungsgemäßen Befestigungselementen zusätzlich am Mauerwerk befestigt werden, ohne dass hierzu die Fassade großflächig oder vollständig vom Mauerwerk abgenommen werden muss. Die Verankerung des Mauerankers im Mauerwerk erfolgt durch das Durchgangsloch in der Fassade hindurch, in welches der Fassadenhalter nach der Verankerung des Mauerankers eingesetzt wird.

Weiterer Vorteil der Erfindung ist, dass der Fassadenhalter die Fassade spreizdruckfrei hält, da er mit Mörtel mit der Fassade verbunden wird. Abplatzungen an der Fassade oder ein Sprengen der Fassade werden dadurch vermieden. Auch der Maueranker ist spreizdruckfrei im Mauerwerk verankerbar, wenn er mit Mörtel im Mauerwerk verankert wird.

Die Verwendung der Begriffe Maueranker und Fassadenhalter dienen der klaren Erläuterung der Erfindung und sind nicht als Einschränkung der Verwendung dieser beiden Teile zu verstehen. Der Maueranker soll beispielsweise auch an einem Holzuntergrund anbringbar sein.

In bevorzugter Ausgestaltung ist der Fassadenhalter von einem insbesondere schlauchförmigen Mörtelstrumpf umgeben. Der Mörtelstrumpf dient zur Aufnahme des durch den Injektionskanal eingespritzten Mörtels, er weist Durchtrittsöffnungen auf, durch die der Mörtel zur Verbindung mit der Fassade austreten kann. Der Mörtelstrumpf kann beispielsweise ein textiles -, ein Kunststoff- oder ein Metallgewebe sein. Auch kann der Mörtelstrumpf eine siebartig mit Löchern versehene Kunststoff- oder Metallhülse sein. Insbesondere ist der Mörtelstrumpf aufweitbar, er wird vom eingespritzten Mörtel aufgeweitet, sofern ein Freiraum um den Mörtelstrumpf besteht. Die Aufweitung des Mörtelstrumpfs ist begrenzt.

In bevorzugter Ausgestaltung der Erfindung sind der Maueranker und/oder der Fassadenhalter stabförmige Teile. Der Maueranker kann beispielsweise ein Armierstab (Dywidagstab) oder ein Gewindestab sein. Der Fassadenhalter kann beispielsweise als den Injektionskanal aufweisende Schraube ausgebildet sein. Die stabförmige Ausbildung des Mauerankers und/oder des Fassadenhalters hat den Vorteil, dass das Befestigungselement durch ein Bohrloch in der Fassade am Mauerwerk und an der Fassade anbringbar ist.

Der Fassadenhalter weist insbesondere einen Kopf auf, mit dem er die Fassade an ihrer Außenseite übergreift und dadurch formschlüssig hält. Die Verbindungseinrichtung zum Verbinden des Fassadenhalters mit dem Maueranker ist vorzugsweise als Schraub-Verbindungseinrichtung mit einem Außen- und einem Innengewinde ausgebildet. Mit der Schraub-Verbindungeinrichtung ist der Fassadenhalter schnell mit dem Maueranker verbindbar und der Fassadenhalter lässt sich in axialer Richtung verstellen. Dadurch ist die Länge des Befestigungselements an den Abstand der Fassade vom Mauerwerk und an die Dicke der Fassade anpassbar.

Bei einer Ausgestaltung der Erfindung sind der Fassadenhalter und der Maueranker einstückig miteinander. Dies ist insbesondere dann möglich, wenn der Maueranker in axialer Richtung verstellbar ist, um ihn an den Abstand der Fassade vom Mauerwerk und die Dicke der Fassade anpassen zu können. Bei Verwendung eines Dübels zur Verankerung des Mauerankers im Mauerwerk ist eine Axialverstellbarkeit durch mehr oder weniger tiefes Einschrauben des Mauerankers in den Dübel gegeben.

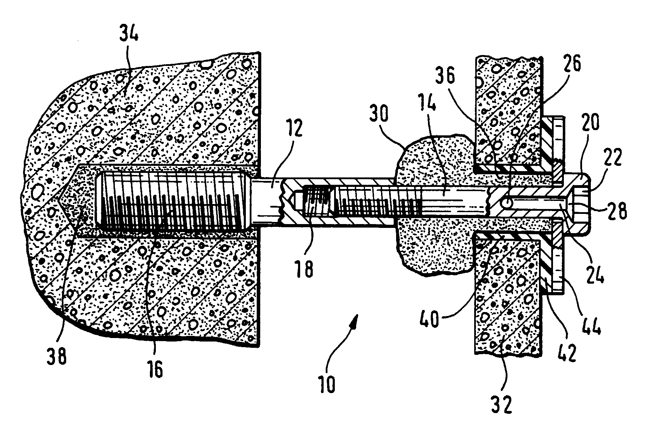

Die Erfindung wird nachfolgend anhand eines in der Zeichnung dargestellten Ausführungsbeispiels näher erläutert.

Die einzige Figur zeigt ein erfindungsgemäßes Befestigungselement teilweise geschnitten.

Das erfindungsgemäße Befestigungselement 10 weist einen stabförmigen Maueranker 12 sowie eine Spezialschraube als Fassadenhalter 14 auf Beide Teile 12,14 bestehen aus Stahl. Der Maueranker 12 weist ein Außengewinde 16 an einem Ende auf.

An einem anderen Ende weist der Maueranker 12 ein koaxiales Innengewinde 18 auf, in das der als Schraube ausgebildete Fassadenhalter 14 eingeschraubt ist. Der Fassadenhalter 14 weist einen Kopf 20 mit einer Inbus-Werkzeugaufnahme 22 auf. Der Fassadenhalter 14 weist einen koaxialen Injektionskanal 24 in Form eines Sacklochs auf, der an seinem Ende von einer Querbohrung 26 durchsetzt ist, welche ebenfalls mit 26 bezeichnete seitliche Austrittsöffnungen des Injektionskanals 24 bildet. Am schraubenkopfseitigen Ende mündet der Injektionskanal 24 mit einem konischen Trichter 28 am Grund der Inbus-Werkzeugaufnahme 22. Der Injektionskanal 24 ist also von einer Kopfseite des Fassadenhalters 14 aus zugänglich. Auf den Fassadenhalter 14 ist zwischen dem Maueranker 12 und dem Kopf 20 ein schlauchförmiger Mörtelstrumpf 30 aus einem Kunststoffgewebe aufgezogen.

Das erfindungsgemäße Befestigungselement 10 dient zur nachträglichen Abstandsbefestigung einer Fassade 32 an einem Mauerwerk 34 im Sanierungsfall, wenn die Belastbarkeit einer vorhandenen Abstandsbefestigung durch Alterung nachgelassen hat und nicht mehr ausreicht. Das erfindungsgemäße Befestigungselement 10 lässt sich an der in Abstand vom Mauerwerk 34 befestigten Fassade 32 anbringen, ohne die Fassade 32 abnehmen zu müssen.

Zur Anbringung des erfindungsgemäßen Befestigungselements 10 wird zunächst ein Durchgangsloch 36 durch die Fassade 32 hindurch gebohrt Ein Durchmesser des Durchgangslochs 36 ist größer als der größte Durchmesser des Befestigungselements 10. Durch das Durchgangsloch 36 in der Fassade 32 wird eine Sackbohrung 38 im Mauerwerk 34 angebracht, deren Durchmesser größer als ein Durchmesser des Außengewindes 16 des Mauerankers 12 ist. Durch das Durchgangsloch 36 in der Fassade 32 wird Mörtel, beispielsweise ein Zwei-Komponenten-Kunstharzmörtel, in die Sackbohrung 38 und anschließend der Maueranker 12 eingebracht. Durch das Einbringen des Mauerankers 12 verteilt sich der Mörtel um das Außengewinde 16 herum in der Sackbohrung 38 und verankert nach dem Abbinden den Maueranker 12 im Mauerwerk 34. Der Mörtel kann auch in einer Patrone enthalten sein, die in das Bohrloch 18 eingebracht und durch anschließendes Einschlagen des Mauerankers 12 zerstört wird, so dass sich der Mörtel im Bohrloch 18 um das Gewinde 16 des Mauerankers 12 verteilt. Dies ist an sich bekannt.

In das Durchgangsloch 36 wird eine Kunststoffhülse 40 mit einem Radialbund 42 eingesetzt. Auf den Fassadenhalter 14 wird eine großflächige Lochscheibe 44 aufgesetzt und der Fassadenhalter 14 wird durch das Durchgangsloch 36 in der Fassade 32 gesteckt und in das Innengewinde 18 im Maueranker 12 eingeschraubt. Der Fassadenhalter 14 wird so tief in den Maueranker 12 eingeschraubt, dass er mit der Lochscheibe 44 mit geringer Andruckkraft über den Bund 42 der Kunststoffhülse 40 an einer Außenseite der Fassade 32 anliegt. Anschließend wird mit einer nicht dargestellten Spritze, die am Trichter 28 angesetzt wird, ein Injektionsmörtel, beispielsweise ein Zwei-Komponenten-Kunstharzmörtel, in den Injektionskanal 24 eingespritzt. Der Injektionsmörtel tritt durch die seitlichen Austrittsöffnungen 26, die sich im Bereich des Durchgangslochs 36 in der Fassadenplatte 32 befinden, aus dem Fassadenhalter 14 aus. Der Injektionsmörtel weitet den Mörtelstrumpf 30 auf und füllt einen Zwischenraum im Durchgangsloch 36 zwischen dem Fassadenhalter 14 und der Fassade 32 aus. Da der Injektionsmörtel den Mörtelstrumpf 30 durchdringt, verbindet der Injektionsmörtel die Fassade 32 stoffschlüssig mit dem Fassadenhalter 14. Es wird eine so große Menge an Injektionsmörtel eingespritzt, dass der Injektionsmörtel auf einer dem Mauerwerk 34 zugewandten Innenseite der Fassade 32 aus dem Durchgangsloch 36 austritt und dort den Mörtelstrumpf 30 ballig nach außen aufweitet. Auf diese Weise ist zusätzlich ein Formschluss zwischen dem Fassadenhalter 14 und der Fassade 32 gegeben, der die Fassade 32 auf ihrer Innenseite abstützt.

Selbstverständlich kann das erfindungsgemäße Befestigungselement 10 auch zur Erstbefestigung der Fassade 32 am Mauerwerk 34 verwendet werden.

## Patentansprüche

1. Befestigungselement zur Abstandsbefestigung einer Fassade an einem Mauerwerk, mit einem Maueranker, der in dem Mauerwerk verankerbar ist, **dadurch gekennzeichnet,** dass das Befestigungselement (10) einen Fassadenhalter (14) aufweist, der in ein Durchgangsloch (36) in der Fassade (32) einsetzbar und der mittels einer Verbindungseinrichtung (18) mit dem Maueranker (12) verbindbar ist, und dass der Fassadenhalter (14) einen Injektionskanal (24) aufweist, der von einer Außenseite der Fassade (32) her zugänglich ist und der mindestens eine seitliche Austrittsöffnung (26) aufweist.

2. Befestigungselement nach Anspruch 1, **dadurch gekennzeichnet,** dass der Fassadenhalter (14) einen ihn umgebenden Mörtelstrumpf (30) aufweist.

3. Befestigungselement nach Anspruch 1, **dadurch gekennzeichnet,** dass der Maueranker (12) und/oder der Fassadenhalter (14) stabförmig ist.

4. Befestigungselement nach Anspruch 3, **dadurch gekennzeichnet,** dass der Mörtelstrumpf (30) schlauchförmig ist.

5. Befestigungselement nach Anspruch 1, **dadurch gekennzeichnet,** dass der Fassadenhalter (14) einen Kopf (20) aufweist.

6. Befestigungselement nach Anspruch 1, **dadurch gekennzeichnet,** dass die Verbindungseinrichtung (18) eine Schraub-Verbindungseinrichtung ist.

7. Befestigungselement nach Anspruch 1, **dadurch gekennzeichnet,** dass der Fassadenhalter (14) und der Maueranker (12) einstückig miteinander sind.

8. Verfahren zur Abstandsbefestigung einer Fassade an einem Mauerwerk, **dadurch gekennzeichnet,** dass ein Durchgangsloch (36) in der Fassade (32) angebracht wird, dass durch das Durchgangsloch (36) hindurch ein Verankerungsloch (38) im dem Mauerwerk (34) angebracht wird, dass in dem Verankerungsloch (38) ein Maueranker (12) verankert wird, dass in das Durchgangsloch (36) der Fassade (32) ein Fassadenhalter (14) eingebracht wird, der mit dem Maueranker (12) verbunden wird, wobei der Fassadenhalter (14) einen Injektionskanal (24) aufweist, der von einer Außenseite der Fassade (32) her zugänglich ist und der mindestens eine seitliche Austrittsöffnung (26) aufweist, und dass durch den Injektionskanal (24) ein Injektionsmörtel zwischen den Fassadenhalter (14) und die Fassade (32) eingebracht wird.
